# EUROPÄISCHE PATENTANMELDUNG

(11) **EP 4 810 936 A1**
(43) Veröffentlichungstag der Anmeldung: **23.09.2026**
(21) Anmeldenummer: 25164993.5
(22) Anmeldetag: 20.03.2025
(51) Int. Cl.: G01N 3/56

(54) **VERFAHREN ZUR BESTIMMUNG DER ABRASIVITÄT EINES FLUIDEN MATERIALS**

(71) Anmelder: Henkel AG & Co. KGaA, 40589 Düsseldorf (DE)
(72) Erfinder: POLUNIN, Konstantin, 42117 Wuppertal (DE); HAUSMANN, Christoph, 52064 Aachen (DE); SCHUH, Holger, 90592 Schwarzenbruck (DE)

(57) **Zusammenfassung**

Die Erfindung betrifft ein Verfahren zur Bestimmung der Abrasivität eines fluiden Materials, wobei eine Fördervorrichtung (20) verwendet wird, die das Material durch eine Testeinheit (30) fördert, die einen Prüfkörper (36) mit einer Öffnung (37) aufweist, durch die das Material geleitet wird, wobei die Öffnung (37) durch die abrasive Eigenschaft des Materials ausgeweitet wird, wobei für den Prüfkörper (36) oder an dem Prüfkörper (36) wenigstens ein Anfangswert vor Durchleitung einer Testmenge des Materials und wenigstens ein Endwert nach Durchleitung der Testmenge aufgenommen werden, und der Anfangswert und der Endwert verwendet werden, das Ausmaß der Ausweitung und somit die Abrasivität des Materials zu bestimmen.

## Beschreibung

Die Erfindung betrifft ein Verfahren zur Bestimmung der Abrasivität eines fluiden Materials.

Fluide Materialen beispielsweise in Form von viskosen Klebstoffen werden in der industriellen Serienproduktion beispielsweise auf ein Substrat aufgetragen, um das Substrat mit einem anderen Bauteil verkleben zu können. Der Klebstoff wird dabei in der Regel durch ein Dosiersystem aufgetragen, wobei die Dosierdrücke zum Auftragen des Materials sehr hoch sein können.

Durch die abrasive Wirkung des eingesetzten Materials besteht die Gefahr, dass Bauteile des Dosiersystems, welche mit dem Material in Kontakt kommen, schnell verschleißen. So können Dichtungen und Dichtsitze des Dosiersystems angegriffen werden, was zu Undichtigkeiten führt. Aber auch Ventile, Düsen, Leitungen, Kanäle und dergleichen können durch die Abrasivität des Materials in Mitleidenschaft gezogen werden, sodass die Dosierung des Materials erschwert, die Dosierung ungenau und/oder das angestrebte Auftragsbild des ausdosierten Materials verändert werden. Letztlich droht ein Totalausfall des Dosiersystems, wenn Bauteile derart beschädigt sind, dass sie ihre Funktion nicht mehr ausüben können, beispielsweise durch ein Festfressen von beweglich gelagerten Teilen, da Führungsflächen oder Dichtsitze zu sehr angegriffen sind. So führt eine höhere Abrasivität des Materials zu einem höheren Wartungsaufwand, um einen ungeplanten und insbesondere in der Serienproduktion mit hohen Kosten verbundenen Stillstand des Dosiersystems zu vermeiden.

Bei der Entwicklung von neuen Klebstoffen oder ähnlichen Materialen ist es hilfreich, bereits in einem frühen Stadium zu erfahren, ob ein neu entwickeltes Material oder eine neue Zusammensetzung eine Abrasivität aufweist, die in der späteren Serienproduktion zu Problemen führen könnte. Stellt sich eine zu hohe Abrasivität heraus, muss das neue Material, obwohl es möglichweise alle anderen Anforderungen gut erfüllt, modifiziert bzw. verworfen werden. Ein neu entwickeltes Material kann vorab hinsichtlich seiner Abrasivität ausgetestet werden, doch sollte dafür der Aufwand möglichst klein sein. Auch die Menge des auszutestenden Materials sollte nicht zu groß sein, da das Material nach erfolgtem Test in der Regel entsorgt werden muss.

Die der Erfindung zu Grunde liegende Aufgabe besteht darin, ein Verfahren bereitzustellen, mit dem die Abrasivität eines fluiden Materials einfach, kostengünstig und ressourcenschonend bestimmt werden kann.

Die der Erfindung zu Grunde liegende Aufgabe wird mit dem Gegenstand gemäß Anspruch 1 gelöst. Ausführungsbeispiele können den Unteransprüchen zu Anspruch 1 entnommen werden.

Erfindungsgemäß ist vorgesehen, dass zur Bestimmung der Abrasivität des fluiden Materials eine Fördervorrichtung verwendet wird, die das Material durch eine Testeinheit fördert. Die Testeinheit weist einen Prüfkörper mit einer Öffnung auf. Das Material wird durch die Öffnung geleitet, wobei die Öffnung durch die abrasive Eigenschaft des Materials ausgeweitet wird. Für den Prüfkörper oder an dem Prüfköper wird wenigstens ein Anfangswert vor Durchleitung einer bestimmten Menge an Material (Testmenge) aufgenommen. Dies kann durch eine Messung einer physikalischen Größe erfolgen. Nach Durchleitung der Testmenge wird ein Endwert aufgenommen, was ebenfalls durch eine Messung erfolgen kann. Der Anfangswert und der Endwert werden verwendet, das Ausmaß der Ausweitung und somit die Abrasivität des Materials zu bestimmen.

Vorzugsweise bezieht sich der Anfangswert auf einen Strömungsquerschnitt der Öffnung vor Durchleitung des Materials. Der Endwert bezieht sich in diesem Ausführungsbeispiel auf den Strömungsquerschnitt der Öffnung nach Durchleitung der Testmenge. Bedingt durch die abrasive Wirkung des beim Test eingesetzten Materials vergrößert sich der Strömungsquerschnitt der Öffnung. Der Werkstoff des Prüfkörpers und die Testmenge des Materials sind dabei so auszulegen, dass sich nach Durchführung des Verfahrens auch eine messbare Ausweitung der Öffnung bzw. eine Vergrößerung des Strömungsquerschnitts ergibt. So können in einfacher Weise verschiedene abrasive Materialen miteinander verglichen. Ein Material mit einer höheren Abrasivität führt dabei nach erfolgter Durchleitung der Testmenge zu einem größeren Strömungsquerschnitt als ein Material mit niedriger Abrasivität

Vorzugsweise wird der Prüfkörper nach Beendigung des erfindungsgemäßen Verfahrens gegen einen neuen Prüfkörper ausgetauscht. So kann bei der Untersuchung unterschiedlicher abrasiver Materialen jeweils von einem immer gleichen Anfangswert ausgegangen werden. Jedem Material kann dann ein Endwert, ein Verhältnis Endwert/Anfangswert und/oder eine Differenz zwischen Endwert und Anfangswert zugeordnet werden.

In einem Ausführungsbeispiel ist die Öffnung kreisrund. Der Anfangswert kann sich hier auf einen Innendurchmesser der Öffnung beziehen. Ein mit dieser Art des Anfangswerts korrespondierender Endwert bezieht sich hier ebenfalls auf den Innendurchmesser der Öffnung. Bei einem durchgeführten Test beispielsweise betrugen der Innendurchmesser vor Durchleitung der Testmenge eines Materials A 1000 µm und der Innendurchmesser nach Durchleitung der Testmenge 1740 µm. Bei einem Material B ergab sich bei gleichem Anfangswert von 1000 µm ein Endwert von 1870 µm. Somit kann die Abrasivität des Materials B direkt mit der Abrasivität des Materials A verglichen werden. Handelt es sich beispielsweise bei Material A um ein neues und ansonsten noch nicht ausgetestetes Material und bei Material B um ein bekanntes Referenzmaterial, das sich bereits in der Serienproduktion bewährt hat und dort hinsichtlich Abrasivität zu keinen Problemen geführt hat, kann über den Vergleich Material A zu Material B eine erste Aussage über die Einsetzbarkeit des neuen Materials A in der Serienproduktion getroffen werden.

In einem Ausführungsbeispiel wird ein Außendurchmesser einer die Öffnung umschließende Fase aufgenommen, die durch die Abrasivität des Materials an einer angeströmten Fläche des Prüfkörpers entsteht. Vorzugsweise steht eine Mittelachse der Öffnung senkrecht zu einer Ebene, in der die angeströmte Fläche liegt.

In einem Ausführungsbeispiel ist in einem Anfangszustand des Prüfkörpers keine Fase an der angeströmten Fläche gegeben, sondern es besteht eine definierte Kante zwischen Fläche und Öffnung. In diesem Fall entspricht der Anfangswert für den Außendurchmesser dem Innendurchmesser der Öffnung. Je größer die Differenz des Außendurchmessers der Fase vor Durchleitung der Testmenge zum Außendurchmesser nach Durchleitung der Testmenge, desto größer die Abrasivität des untersuchten Materials.

Die Erfassung des Außendurchmessers erfolgt bevorzugt parallel zu der Erfassung des Innendurchmessers. Dies bedeutet, dass im Rahmen der Erfindung mehrere Anfangswerte und entsprechende Endwerte aufgenommen werden können (beispielsweise durch Messung), die sich auf unterschiedliche Maße oder physikalische Größe beziehen können.

In einem Ausführungsbeispiel bezieht sich der Anfangswert auf ein Gewicht des Prüfkörpers. Vor Durchleitung und nach Durchleitung der Testmenge kann der Prüfkörper jeweils mit einer Waage mit hinreichend genauer Messgenauigkeit gewogen werden. Insbesondere nach Durchleitung der Testmenge ist darauf zu achten, dass das Messergebnis nicht durch anhaftende Materialreste verfälscht wird. Vorzugsweise wird der Prüfkörper daher vor der Erfassung des Endgewichts gespült oder gereinigt. Die Abnahme des Gewichts korreliert dabei mit dem Materialabtrag am Prüfkörper, der durch das abrasive Material verursacht worden ist.

In einem Ausführungsbeispiel werden als Anfangswerte der Innendurchmesser der Öffnung und das Gewicht des Prüfkörpers erfasst. Entsprechend werden als Endwerte der Innendurchmesser und das Gewicht nach Durchleitung der Testmenge erfasst.

Als Fördervorrichtung kann eine Dosiervorrichtung eingesetzt werden, die in ihrem gewöhnlichen Betrieb zur Ausdosierung des Materials oder einem ähnlichen Material eingesetzt wird, wobei eine Dosierdüse der Dosiervorrichtung durch die Testeinheit ersetzt wird. Somit kann eine bereits bestehende Dosiervorrichtung zur Durchführung des erfindungsgemäßen Verfahrens verwendet werden. In der Regel lässt sich die Dosierdüse in einfacher Weise von einem Düsenverbindungsstück der Dosiervorrichtung abschrauben und durch die Testeinheit ersetzen. Die Testeinheit umfasst dabei vorzugsweise ein Gewinde, was sich durch eine Schraubbewegung mit dem Düsenverbindungsstück verbinden lässt.

Die Verwendung einer gewöhnlichen Dosiervorrichtung hat den Vorteil, dass zur Durchführung des erfindungsgemäßen Verfahrens keine gesonderte Fördervorrichtung bereitgestellt werden muss.

Auch kann das Material mit einem Druck durch die Öffnung des Prüfkörpers gefördert werden, die üblicherweise für die Ausdosierung des Materials verwendet werden. Der Druck, gemessen vor der Testeinheit, kann Werte zwischen 5 und 240 bar (Absolutdruck), vorzugsweise Werte zwischen 120 und 170 bar annehmen.

Der Prüfkörper wird vorzugsweise mit einem konstanten Durchflussstrom durchflossen, welcher in einem Ausführungsbeispiel 5 bis 15 ccm/s oder 8 bis 12 ccm/s beträgt. Die Fördervorrichtung muss dafür entsprechende Regelungsmittel aufweisen, um den Durchflussstrom auf einem gewünschten Sollwert (beispielsweise 10 ccm/s) zu halten.

Die Fördervorrichtung kann eine Förderkammer mit einem Kolben aufweisen, über dessen Hubgeschwindigkeit der Durchflussstrom eingestellt wird. Der Durchflussstrom (Durchflussmenge pro Zeiteinheit) entspricht dabei dem Produkt aus der Kolbenfläche und der Hubgeschwindigkeit. In einem Ausführungsbeispiel steht ein Servomotor mit einer Spindel in Eingriff, wobei die Spindel die Drehung des Servomotors in eine axiale Bewegung des Kolbens umformt. Durch eine PID-Regelung können die Drehzahl des Servomotors und somit der volumetrische Durchflussstromgeregelt werden.

Die Testmenge kann in zwei oder mehr Teilschritten durch den Prüfkörper gefördert werden, wobei nach erfolgter Entleerung die Förderkammer wieder befüllt wird und ein nächster Teilschritt gestartet wird. Somit kann auch eine Dosiereinrichtung verwendet werden, die eigentlich dazu ausgelegt ist, in einem Dosiervorgang nur eine kleinere Menge, welche kleiner ist als die erforderliche Testmenge, auszudosieren.

Ein Volumen der Testmenge kann kleiner als 1500 ccm, vorzugsweise kleiner als 1000 ccm oder gar kleiner als 700 ccm sein. Dabei handelt es sich um vergleichsweise geringe Mengen, die beim erfindungsgemäßen Verfahren eingesetzt werden. Ein Mindestwert für die Testmenge kann 400 ccm betragen. Der Einsatz einer kleinen Testmenge eröffnet die Möglichkeit, eine Vielzahl von Materialkandidaten zu testen, ohne dass dabei große Mengen anfallen, die nach Durchführung des Verfahrens entsorgt werden müssen. Auch können so in kurzer Zeit viele Materialkandidaten durchgetestet werden. In einem Ausführungsbeispiel, bei dem die Testmenge in mehreren Teilschritten durch den Prüfkörper geleitet wird, kann eine Teiltestmenge pro Teilschritt bei vier Teilschritten jeweils 150 ccm betragen.

Die Testmenge darf auch nicht zu klein sein, da ansonsten die Ausweitung der Öffnung und somit die Abrasivität mit vertretbarem (Mess-)Aufwand nicht ermittelt werden kann. Das Maß der Ausweitung kann neben der Festlegung der Testmenge auch durch die Auswahl des Werkstoffes für den Prüfkörper eingestellt werden. Wird ein weicher Werkstoff gewählt, der durch das zu testende abrasive Material stark abgetragen wird, ist mit einer größeren Ausweitung der Öffnung zu rechnen als bei Verwendung eines härteren oder widerstandfähigeren Werkstoffes. In einen bevorzugten Ausführungsbeispiel ist der Prüfkörper aus einer Aluminiumlegierung, beispielsweise Al-Cu4PbMgMn. Der Prüfkörper kann auch aus anderen Metallen oder auch aus Kunststoff sein.

Da bevorzugt der Prüfkörper nach Durchführung des Tests eines Materials nicht mehr für den Test anderer Materialen verwendet wird, ist es zweckmäßig, wenn der Prüfkörper einfach und kostengünstig bereitgestellt werden kann. Der Prüfkörper kann eine flache runde Scheibe sein, wobei die Öffnung zentral angeordnet ist. In einem Ausführungsbeispiel betragen ein Außendurchmesser der Scheibe 15 bis 20 mm und eine Dicke der Scheibe 3 bis 8 mm. Der Innendurchmesser der Öffnung vor Durchleitung der Testmenge kann in einem Bereich zwischen 0,5 bis 3 mm liegen. Die Scheibe kann Mittel an ihrem Außenumfang aufweisen (beispielsweise einen abgestuften Außendurchmesser), durch die eine genaue Positionierung der Scheibe innerhalb eines aufnehmenden Raumes der Testeinheit ermöglicht wird.

Die Testeinheit kann einen Adapter mit einem Innengewinde und einen Außengewinde aufweisen, wobei das Außengewinde dazu dient, auf ein Innengewinde des Düsenverbindungsstücks der Dosiereinrichtung geschraubt zu werden, auf das normalerweise die Dosierdüse der Dosiereinrichtung geschraubt wird. Auf das Innengewinde kann eine Überwurfmutter mit einem Innenraum geschraubt werden, in den vor Verschraubung mit dem Adapter der Prüfkörper eingelegt wird.

Der Adapter kann einen länglichen Kanal aufweisen, dem sich in eingesetzter Lage der Prüfkörper anschließt. Eine Mittelachse des Kanals fluchtet dabei mit der Mittelachse der Öffnung des Prüfkörpers. Beim erfindungsgemäßen Verfahren fließt das Material zunächst durch den Kanal des Adapters und trifft dann auf den Prüfkörper, durch dessen Öffnung dann das Material gedrückt wird.

Vorzugsweise wird der Druck erfasst, mit dem das Material durch die Testeinheit gefördert wird. So kann in Strömungsrichtung gesehen vor der Testeinheit ein Drucksensor vorgesehen sein.

Anhand der in der Zeichnung dargestellten Ausführungsbeispiele wird die Erfindung näher erläutert. Es zeigen:
- Figur 1: eine schematische Darstellung eines Fördersystems zur Durchführung des erfindungsgemäßen Verfahrens;
- Figur 2: ein Ausführungsbeispiel für eine Testeinheit mit Prüfkörper;
- Figur 3: ein Ablaufschema für ein Ausführungsbeispiel des erfindungsgemäßen Verfahrens; und
- Figur 4: schematisch einen Teil des Prüfkörper vor und nach der Durchleitung einer Testmenge.

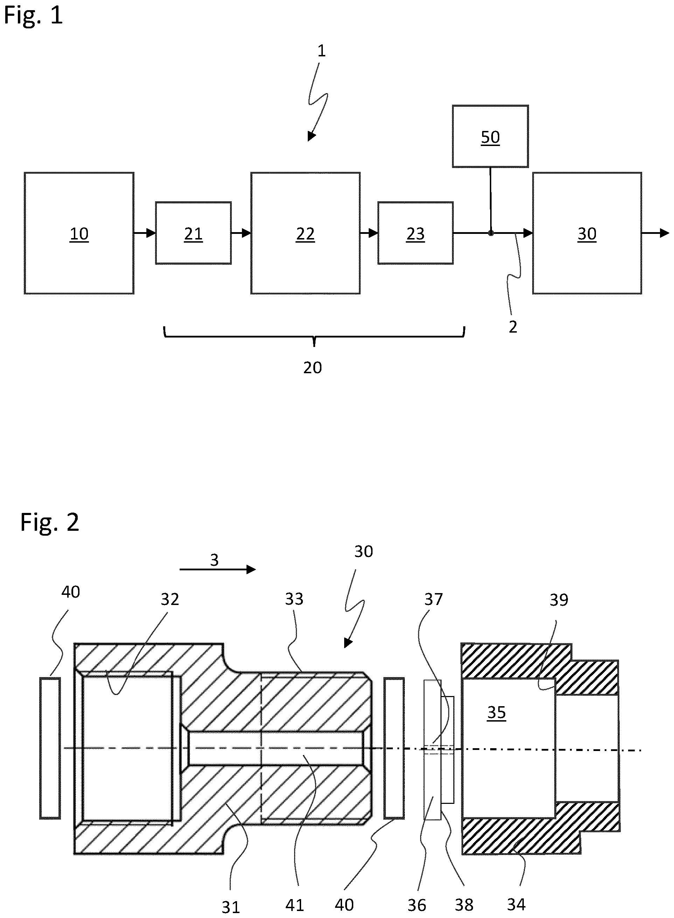

Figur 1 zeigt schematisch ein Fördersystem 1, welches zur Durchführung des erfindungsgemäßen Verfahrens verwendet werden kann. Das Verfahren dient zur Bestimmung der Abrasivität eines liquiden Materials wie beispielsweise ein viskoser Klebstoff, der als Klebstoffraupe auf ein Substrat ausdosiert werden kann.

Das Fördersystem 1 umfasst eine Materialversorgung 10, eine Fördervorrichtung 20 sowie eine Testeinheit 30. Die Fördervorrichtung 20 weist ein Einlassventil 21, eine Förderkammer 22 und ein Auslassventil 23 auf. Zwischen dem Auslassventil 23 und der Testeinheit 30 ist ein Sensor 50 zur Ermittlung eines Drucks unmittelbar vor der Testeinheit 30 vorgesehen. Über einen verfahrbaren Kolben (nicht dargestellt) kann das Volumen der Förderkammer 20 verändert werden, sodass ein in die Förderkammer 20 zuvor eingefülltes Material durch eine Kolbenbewegung bei geöffnetem Auslassventil 23 in Richtung der Testeinheit 30 gefördert werden kann. Die Strömungsrichtung des Materials wird in Figur 1 durch die Pfeile 2 dargestellt.

Wenn die Förderkammer 22 entleert worden ist, wird zwecks Befüllung der Förderkammer 22 das Auslassventil 23 geschlossen und das Einlassventil 22 geöffnet. Material aus der Materialversorgung 10, welche auch eine Pumpeinheit aufweist, wird dann in die Förderkammer 22 geleitet, bis diese wieder vollständig gefüllt ist. Danach werden das Einlassventil 22 wieder geschlossen und das Auslassventil geöffnet.

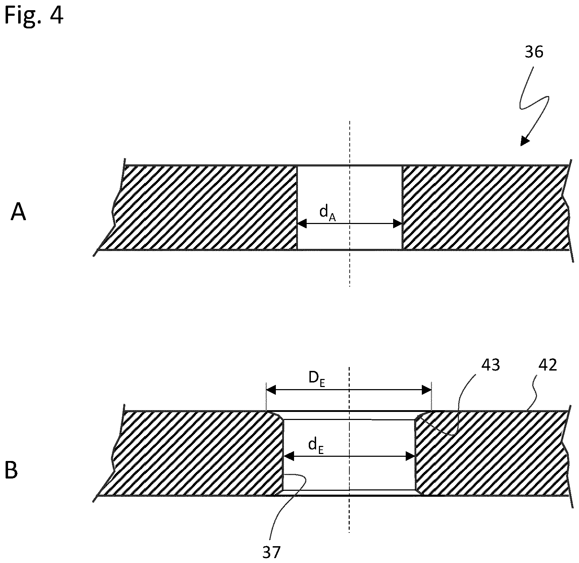

Figur 2 zeigt die einzelnen Komponenten der Prüfeinheit 30 in einer Explosionsdarstellung. Die Prüfeinheit 30 weist einen Adapter 31 mit einen Innengewinde 32 und einem Außengewinde 33 auf. Das Innengewinde 32 dient dazu, die Prüfeinheit 30 mit einem Düsenverbindungsstück (nicht dargestellt) der Fördervorrichtung 20 zu verbinden. Auf das Außengewinde 33 lässt sich eine Überwurfmutter 34 schrauben, die einen Innenraum 35 zur Aufnahme eines Prüfkörpers 36 aufweist. Der Prüfkörper 36 ist in dem hier dargestellten Ausführungsbeispiel eine runde Scheibe mit einer zentral angeordneten Öffnung oder Bohrung 37. Ein mittlerer Ausschnitt des Prüfkörpers 36 ist im vergrößerten Maßstab in Figur 4 dargestellt.

Der Prüfkörper 36 ist aus Aluminium bzw. aus einer Aluminiumlegierung. Zur Zentrierung im Innenraum 35 der Überwurfmutter 34 weist der Prüfkörper 36 an einem Außenumfang eine Stufe 38 auf. Im zusammengeschraubten Zustand drückt der Adapter 31 den Prüfkörper 36 gegen eine Anlagefläche 39 der Überwurfmutter 34.

Zur Abdichtung zwischen Adapter 31 und Überwurfmutter 34 bzw. zwischen Düsenverbindungsstück und Adapter 31 sind dichtende Unterlegscheiben 40 vorgesehen. Der Pfeil 3 in Figur 2 zeigt die Strömungsrichtung des Materials durch die Testeinheit. Bevor das Material auf den Prüfkörper 36 trifft und durch dessen Öffnung 37 gedrückt wird, fließt es durch einen langestreckten Kanal 41. Eine Mittelachse des Kanals 41 fällt dabei mit einer Mittelachse der Öffnung 37 zusammen.

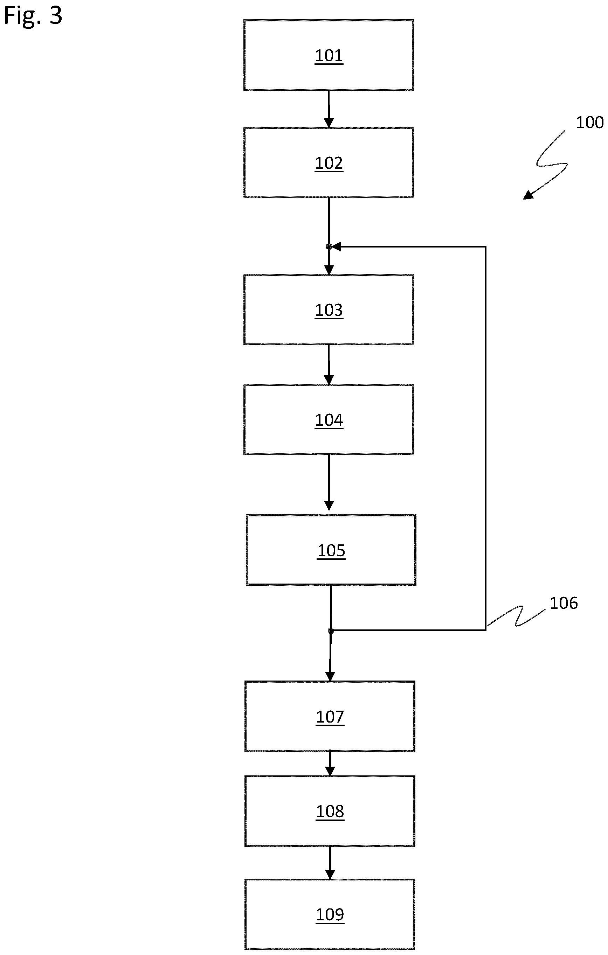

Figur 3 zeigt ein Ablaufdiagramm 100 für ein Ausführungsbeispiel des erfindungsgemäßen Verfahrens. Zunächst wird das Gewicht des Prüfkörpers 36 ermittelt (Schritt 101). In einem nachfolgenden Schritt 102 werden der Prüfkörper 36 und eine der Unterlegscheiben 40 in den Innenraum 35 der Überwurfkammer 34 gelegt und anschließend die Überwurfmutter auf den Adapter 31 geschraubt. Danach wird der Adapter 31 mit dem Düsenverbindungstück der Fördervorrichtung 20 verbunden.

Im Schritt 103 wird die Förderkammer 22 mit dem zu untersuchenden Material gefüllt. In einem nachfolgenden Schritt 104 wird das Material mit einem konstanten Durchflussstrom durch die Öffnung 37 geleitet. Das Material reibt dabei an der Innenfläche der Öffnung 37 entlang und trägt den Werkstoff des Prüfkörpers ab. Aufgrund der damit einhergehenden Ausweitung des Strömungsquerschnitts der Öffnung 37 nimmt der Strömungswiderstand des Prüfkörpers ab. Dadurch fällt bei konstant gehaltenen Durchflussstrom der Druck vor dem Prüfkörper. Der Druckverlauf wird dabei durch den Sensor 40 gemessen (siehe Schritt 105).

In Abhängigkeit des maximalen Volumens der Förderkammer 22 wird eine Schleife 106 mehrmals durchlaufen. Dabei werden die Förderkammer 22 wieder befüllt (Schritt 103), das Material durch die Öffnung 37 des Prüfkörpers 36 gedrückt (Schritt 104) und der Druck vor dem Prüfkörper 36 erfasst (Schritt 105).

Ist eine bestimmte Menge an Material (Testmenge) erreicht, die durch die Öffnung 37 geleitet werden soll, wird die Ausdosierung gestoppt, die Testeinheit 30 demontiert und der Prüfkörper 36 ausgebaut (Schritt 107). Im Schritt 108 wird das Gewicht des Prüfkörpers 36 ermittelt, welches nach Durchleitung der Testmenge aufgrund der Abrasivität des Materials geringer ist als vor Durchleitung der Testmenge. Letztlich erfolgt die Auswertung der Messergebnisse (Schritt 109), nämlich ein Vergleich des Gewichts des Prüfkörpers vor und nach Durchleitung der Testmenge. Eine große Gewichtsreduktion weist auf eine hohe abrasive Wirkung des getesteten Materials hin. Schritt 109 umfasst hier auch die Auswertung des Druckverlaufs. Eine große Druckreduktion während der Durchleitung durch die Öffnung 37 deutet auf eine hohe Abrasivität hin. Der Druckverlauf dient hier zumindest dazu, die Erkenntnisse aus der ermittelten Gewichtsreduktion zu stützen und besser einordnen zu können.

Figur 4 zeigt einen Ausschnitt des Prüfkörpers vor Durchleitung der Testmenge (siehe Figur 4A) und nach Durchleitung der Testmenge (siehe Figur 4B). In Zusammenschau ist zu erkennen, dass ein Innendurchmesser d_{E} nach Durchleitung der Testmenge größer ist als ein Innendurchmesser d_{A} vor Durchleitung der Testmenge. Zudem ist zu erkennen, dass an einer angeströmten Fläche 42 des Prüfkörpers 37 sich um die Öffnung 37 herum eine Abrundung oder Fase 43 gebildet hat. Für diese Fase 53 lässt sich ein Außendurchmesser D_{E} bestimmen. Handelt es sich bei dem getesteten Material um ein stark abrasives Material, weitet sich nicht nur die Öffnung 37 aus, sondern es bildet sich auch eine große Abrundung/Fase 43 mit einem vergleichsweise Außendurchmesser D_{E}. Als nicht eingezeichneter Außendurchmesser D_{A} der (noch nicht vorhandenen) Fase vor Durchleitung der Testmenge kann der Innendurchmesser d_{A} angesehen werden.

Im Ausführungsbeispiel wird das Gewicht des Prüfkörpers 36 vor und nach Durchleitung der Testmenge bestimmt. Zusätzlich oder alternativ können aber auch die Innendurchmesser d_{A}, d_{E} und/oder der Außendurchmesser D_{E} gemessen werden. Dabei stellt das Gewicht des Prüfkörpers 36 vor Durchleitung der Testmenge stellt einen möglichen Anfangswert dar. Auch der Innendurchmesser d_{A} vor Durchleitung der Testmenge stellt einen Anfangswert dar. Der Anfangswert bzw. die Anfangswerte können dann mit korrespondierenden Endwerten (entsprechender Wert nach Durchleitung der Testmenge) verglichen werden. Je größer die Abweichung von Endwert zu Anfangswert, desto größer ist die Abrasivität des untersuchten Materials.

### Bezugszeichenliste

- 1: Fördersystem
- 2: Pfeil
- 3: Pfeil
- 10: Materialversorgung
- 20: Fördervorrichtung
- 21: Einlassventil
- 22: Förderkammer
- 23: Auslassventil
- 30: Testeinheit
- 31: Adapter
- 32: Innengewinde
- 33: Außengewinde
- 34: Überwurfmutter
- 35: Innenraum
- 36: Prüfkörper
- 37: Öffnung
- 38: Stufe
- 39: Anlagefläche
- 40: Unterlegscheibe
- 41: Kanal
- 42: angeströmte Fläche
- 43: Fase/Abrundung
- 50: Sensor

- 100: Ablaufdiagramm
- 101: Schritt
- 102: Schritt
- 103: Schritt
- 104: Schritt
- 105: Schritt
- 106: Schleife
- 107: Schritt
- 108: Schritt
- 109: Schritt

## Patentansprüche

1. Verfahren zur Bestimmung der Abrasivität eines fluiden Materials, wobei eine Fördervorrichtung (20) verwendet wird, die das Material durch eine Testeinheit (30) fördert, die einen Prüfkörper (36) mit einer Öffnung (37) aufweist, durch die das Material geleitet wird, wobei die Öffnung (37) durch die abrasive Eigenschaft des Materials ausgeweitet wird, wobei für den Prüfkörper (36) oder an dem Prüfkörper (36) wenigstens ein Anfangswert vor Durchleitung einer Testmenge des Materials und wenigstens ein Endwert nach Durchleitung der Testmenge aufgenommen werden, und der Anfangswert und der Endwert verwendet werden, das Ausmaß der Ausweitung und somit die Abrasivität des Materials zu bestimmen.

2. Verfahren nach Anspruch 1, **dadurch gekennzeichnet, dass** der Anfangswert sich auf einen Strömungsquerschnitt der Öffnung (37) vor Durchleitung des Materials bezieht.

3. Verfahren nach Anspruch 1 oder 2, **dadurch gekennzeichnet, dass** die Öffnung (37) kreisrund ist und der Anfangswert sich auf einen Innendurchmesser der Öffnung (37) bezieht.

4. Verfahren nach einem der Ansprüche 1 bis 3, **dadurch gekennzeichnet, dass** der Anfangswert sich auf einen Außendurchmesser einer die Öffnung (37) umschließende Fase (43) bezieht, die durch die abrasive Wirkung des Materials an einer angeströmten Fläche (42) des Prüfkörpers (36) entsteht.

5. Verfahren nach einem der Ansprüche 1 bis 4, **dadurch gekennzeichnet, dass** der Anfangswert sich auf ein Gewicht des Prüfkörpers (36) bezieht.

6. Verfahren nach Anspruch 1, **dadurch gekennzeichnet, dass** als Fördervorrichtung (20) eine Dosiervorrichtung eingesetzt wird, die in ihrem gewöhnlichen Betrieb zur Ausdosierung des Materials oder einem ähnlichen Material eingesetzt wird, wobei eine Dosierdüse der Dosiervorrichtung durch die Testeinheit (30) ersetzt wird.

7. Verfahren nach einem der Ansprüche 1 bis 6, **dadurch gekennzeichnet, dass** der Prüfkörper (36) mit einem konstanten Durchflussstrom durchflossen wird, welcher bevorzugt 5 bis 15 ccm/s beträgt.

8. Verfahren nach Anspruch 7, **dadurch gekennzeichnet, dass** die Fördervorrichtung (20) eine Förderkammer (22) mit einem Kolben aufweist, über dessen Hubgeschwindigkeit der Durchflussstrom eingestellt wird.

9. Verfahren nach einem der Anspruch 8, **dadurch gekennzeichnet, dass** die bestimmte Menge in zwei oder mehr Teilschritten durch den Prüfkörper (36) gefördert wird, wobei nach erfolgter Entleerung die Förderkammer (22) wieder befüllt und ein nächster Teilschritt gestartet werden.

10. Verfahren nach einem der Ansprüche 1 bis 9, **dadurch gekennzeichnet, dass** ein Volumen der bestimmten Menge kleiner als 1500 ccm, vorzugsweise kleiner als 1000 ccm oder gar kleiner als 700 ccm verwendet wird.

11. Verfahren nach einem der Ansprüche 1 bis 10, **dadurch gekennzeichnet, dass** als Prüfkörper (36) eine Scheibe aus einer Aluminiumlegierung verwendet wird.

12. Verfahren nach einem der Ansprüche 1 bis 11, **dadurch gekennzeichnet, dass** die Testeinheit (30) einen Adapter (31) mit einem länglichen Kanal (41) aufweist, durch den das Material geführt wird, wobei an einem stromabwärts gelegenen Ende des Kanals (41) der Prüfkörper (36) angeordnet ist.

13. Verfahren nach einem der Ansprüche 1 bis 12, **dadurch gekennzeichnet, dass** der Druck erfasst wird, mit dem das Material durch die Testeinheit (30) gefördert wird.
